# EUROPEAN PATENT APPLICATION

(11) **EP 3 139 225 A2**
(43) Date of publication of application: **08.03.2017**
(21) Application number: 16185112.6
(22) Date of filing: 22.08.2016
(51) Int. Cl.: G05B 19/401

(54) **METHOD FOR PRODUCING A TRIM ELEMENT COMPRISING AT LEAST A PANEL OF LIGNEOUS MATERIAL AND ASSOCIATED PRODUCING ASSEMBLY**

(30) Priority: 31.08.2015 DE 102015114486
(71) Applicant: Faurecia Innenraum Systeme GmbH, 76767 Hagenbach (DE); Tabu S.P.A., 22063 Cantu' (IT)
(72) Inventor: TAGLIABUE, Andrea, 22063 CANTU (IT); PICCIN, Hugo, 82041 DEISENHOFEN (DE); MRSIC, Dalibor, 76744 Wörth am Rhein (DE); TOMEC, Primoz, 2318 Laporje (SI)
(74) Representative: Lavoix

(57) **Abstract**

The present invention relates to a method for producing a trim element comprising at least a panel (4), comprising:
- providing at least two layers (8) of ligneous material,
- defining for each layer a joining line,
- cutting each layer along the joining line,
- assembling the two layers by applying the joining lines of the two layers against each other.

The step of defining the joining line for each layer comprises the following steps:
- acquiring an image of the surface of at least a joining area (20) of each layer
- tracing the joining line on the acquired images, extending substantially along at least one natural wood grain pattern (18),
- transmitting the traced joining lines to a cutting tool arranged to cut each layer.

## Description

The present invention relates to a method for producing a trim element comprising at least a panel of ligneous material, said method comprising:
- providing at least two layers of ligneous material to be joined together along a joining line to form the panel of ligneous material,
- defining for each layer of ligneous material a joining line, the joining line of one of the layer of ligneous material being complementary to the joining line of the other layer of ligneous material,
- cutting each layer of ligneous material along the joining line of said layer,
- assembling the two layers of ligneous material by applying the joining lines of the two layers against each other.

The invention also relates to an associated assembly for producing a trim element comprising at least a panel of ligneous material.

Trim elements are used to line a part of the compartment of a vehicle, for example, to cover a dashboard and/or a door panel or other parts of the compartment. In order to improve the aesthetics of the compartment, trim elements having the aspect of wood are particularly appreciated. In this case, the trim elements, for example, comprise a panel of ligneous material, which can be made of natural wood or of a resin matrix comprising wood fibers for example, arranged to be visible from the exterior of the trim elements in order to confer a wood aspect to the trim element.

However, such a panel of ligneous material is not easy to shape into a three-dimensional shape, in particular to cover a large visible surface of the trim element. It is indeed very expensive to have a one piece surface of ligneous material without cracks. It is known to provide two layers of ligneous material to be joined together along a joining line to cover a larger surface. However, such a panel, formed by different adjacent layers of ligneous material without continuity between their respective veneers or burls on their surface, looks like a patchwork. In order to improve the aesthetics of the compartment, it would be preferable that the junction between the different layers of ligneous material is not visible.

Document US-2004/0250508 discloses a method for producing a trim element wherein the joining lines are hidden by assembling a plurality of panels and by cutting the assembly along a plane perpendicular to the planes containing the joining lines. However this method involves a large number of layers of ligneous material and is very fastidious.

One of the aims of the invention is to overcome these drawbacks by proposing a method for producing a trim element adapted to hide the joining area between two adjacent layers.

To this end, the invention relates to a method of the afore-mentioned type, characterized in that the step of defining the joining line for each layer of ligneous material comprises the following steps:
- acquiring an image of the surface of at least a joining area of each layer of ligneous material, the joining area being the area of the layer of ligneous material wherein the joining line is to be defined,
- tracing the joining line on the acquired images, each joining line extending substantially along at least one natural wood grain pattern of the joining area and being complementary to the joining line of the other joining area,
- transmitting the traced joining lines to a cutting tool arranged to cut each layer of ligneous material along the defined joining lines.

By acquiring an image of the surfaces to be joined and tracing the joining lines on the acquired image before transmitting the traced joining lines to the cutting tool, the operator does not need to trace directly the joining line on the real ligneous layers. The layer of ligneous material can be shaped without risking of degrading the layers. The use of acquired images allows the operator to choose precisely where to define the joining lines on the layers, without degrading the layers and with data processing tools for easing the definition of the joining lines. The operator can make several tries to obtain the desired quality. The joining line, following a natural wood grain pattern, is defined such that it becomes substantially invisible when the layers of ligneous material are assembled together, thereby providing a trim element having an improved appearance.

According to other features of the method according to the invention:
- the cutting step is a laser cutting step;
- the tracing step is performed on a monitor displaying the acquired images, using a joining line tracer to trace and display the joining lines on the monitor;
- the method comprises a step of enhancing a color range in the acquired image;
- the method comprises a step of zooming on a part of the joining area to detect the natural wood grain pattern;
- the method comprises a preview step wherein a simulated resulting panel image is displayed, the simulated resulting panel image being a simulated image of the two layers of ligneous material with the traced joining lines of the two layers applied against each other;
- the acquiring step, the tracing step and the preview step are repeated until a validation step, and wherein the transmitting step and the cutting step start only after the validation step.

The present invention also relates to an assembly for producing a trim element comprising at least a panel of ligneous material, the producing assembly comprising:
- at least two layers of ligneous material to be joined together along a joining line to form the panel of ligneous material,
- a drawing tool for defining for each layer of ligneous material a joining line, the joining line of one of the layer of ligneous material being complementary to the joining line of the other layer of ligneous material
- a cutting tool for cutting each layer of ligneous material along the joining line of said layer,
- an assembling unit for assembling the two layers of ligneous material by applying the joining lines of the two layers against each other,
characterized in that the tool drawing for defining the joining line for each layer of ligneous material comprises:
- an image captor of the surface of at least a joining area of each layer of ligneous material, the joining area being the area of the layer of ligneous material wherein the joining line is to be defined,
- a joining line tracer for tracing the joining lines on the acquired images, each joining line extending substantially along at least one natural wood grain pattern of the joining area and being complementary to the joining line of the other joining area,
- a transmission unit arranged to transmit the traced joining lines to the cutting tool. According to other features of the method according to the invention:
- the tool for defining the joining line for each layer of ligneous material comprises a monitor arranged to display the images acquired by the captor, the joining line tracer being arranged to display the traced joining lines directly on the displayed images as waterline;
- the cutting tool is a laser cutting tool.

The invention also relates to a trim element produced by such a method.

Other aspects and advantages of the invention will appear upon reading the following description, given by way of example and made in reference to the appended drawings, wherein:
- Fig. 1 is a cross-section view of a complex comprising a panel of ligneous material used for producing a trim element,
- Fig. 2 is a schematic representation of an assembly for producing a trim element with the panel of fig. 1,
- Fig. 3 is a top view of the joining areas of the two layers of the complex of figure 1 during a step of defining the joining lines,
- Fig. 4 is a top view of the joining areas of the two layers of the complex of figure 1 after the step of cutting along the joining lines,
- Fig. 5 is a top view of the joining areas of the two layers of the complex of figure 1 after the step of assembling, the joining lines being represented in dashed line to help the understanding,
- Fig 6 is a top view analogue to fig 5 of the joining areas of the two layers of the panel of another example after the step of assembling the joining lines being represented in dashed line to help the understanding.

In the following description, the term "front" is used to designate what is turned towards the exterior of the trim element, i.e. toward the inside of a vehicle compartment for example, and the term "back" is used to designate what is turned towards the interior of the trim element, i.e. toward the body of a vehicle for example.

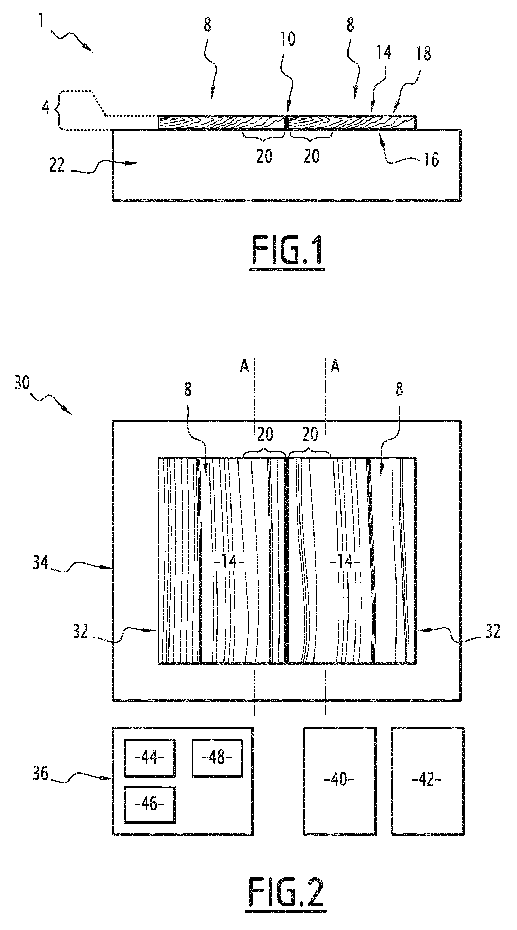

In reference to Fig. 1, there is described a complex 1 forming a front part of a trim element to be produced. The complex 1 comprises a panel 4 of ligneous material. The panel 4 of ligneous material is formed by at least two layers 8 of ligneous material. On the panel 4, the layers 8 of ligneous material are adjacent and joined by a joining line 10.

Each layer 8 of ligneous material is for example formed of one layer of natural wood or of a superposition of wood layers. Alternatively, the layer 8 of ligneous material can be formed of wood fibers embedded in a resin matrix or a layer of veneer. The layer 8 of ligneous material is sufficiently thin to have certain flexibility and thus be adapted to be deformed up to a certain extent. The layer 8 of ligneous material for example presents a thickness substantially comprised between 0.1 and 2 mm. According to a particular embodiment, the thickness of the layer 8 of ligneous material is comprised between 0.3 mm and 0.7 mm, and preferably equal to 0.5 mm.

Each layer 8 of ligneous material presents a front face 14 and a back face 16. The front face 14 is intended to be visible from the interior of a vehicle compartment, meaning that the front faces 14 of both layers 8 of ligneous material form together the front face of the panel 4, which is intended to be visible from the interior of a vehicle compartment. The front face 14 of the layer 8 of ligneous material presents a natural wood grain pattern 18.

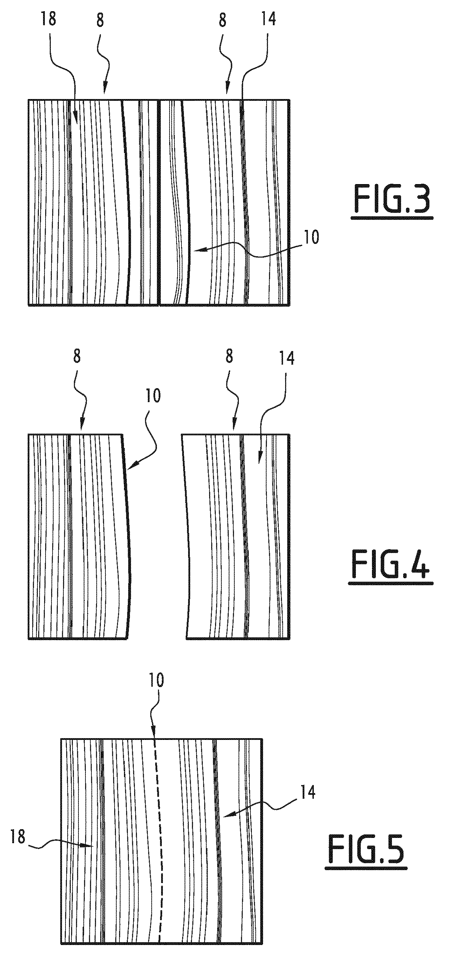

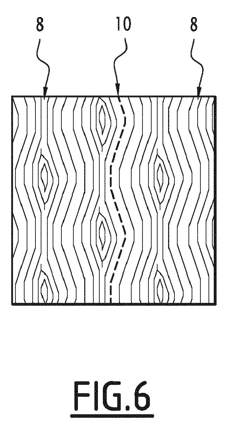

In the example illustrated on fig 3 to 5 presents, the natural wood grain pattern 18 is a straight grain veneers pattern. The lines of the pattern 18 are substantially orientated along an average main direction A. In the example of figure 6, the natural wood grain pattern 18 is a burl veneers pattern. The burls are distributed upon the surface of the layer 8. Such a natural wood grain pattern 18 is for example defined by the lines formed by the fibers of wood extending in the layer 8.

In case of a reconstituted wood layer, the orientation of the fibers also forms patterns, which are visible and which are considered as "natural wood grain pattern 18".

The joining line 10 of one of the layers 8 of ligneous material is complementary to the joining line 10 of the other layer 8 of ligneous material. By complementary, it is meant that each joining line 10 follows a similar wood grain pattern 18 such that, when the joining lines 10 are applied against each other, the transition between the two layers 8 also follows a natural wood grain pattern 18.

After an assembling step, the joining lines 10 are combined, i.e. are applied against each other. Moreover after the assembling step the joining line 10 are hidden in the pattern 18 of the panel 4, since both joining lines 10 blend together and form a natural wood grain pattern 18 in the panel 4.

The joining area 20 is the area of the layer 8 of ligneous material wherein the joining line 10 is to be defined. Each joining line 10 extends substantially along at least one natural wood grain pattern 18 in the joining area 20.

In the example represented on figure 1, the complex 1 further comprises a backing layer 22. The backing layer 22 extends directly on the back faces 16 of the layers 8 of the panel 4 of ligneous material 4 and is attached to the back faces 16, for example by gluing. The backing layer 22 is made of a flexible material. By flexible, it is meant that the backing layer 22 is not rigid and can be shaped. The material of the backing layer 22 is for example a textile, such as a woven or a non-woven fabric, or paper or cardboard or a film of plastic material. The complex 1 formed by the assembly of the panel 4 of ligneous material 4 and of the backing layer 22 is therefore flexible and is adapted to be deformed up to a certain extent, such that it can acquire a three-dimensional shape corresponding to the shape of the part to be lined by the trim element of the invention. The total thickness of the complex 1 is for example comprised between 0.5 mm and 4 mm, and preferably equal to 2.3 mm.

A vanish layer can furthermore be provided on the front face of the panel 4. Such a varnish is translucent or transparent such that the front face of the panel 4 remains visible through the varnish.

An assembly 30 for producing a trim element, according to the invention will now be described. The assembly 30 is represented on figure 2.

The assembly 30 comprises at least two layers 8 of ligneous material to be joined together along a joining line 10 to form the panel 4 of ligneous material as described previously. For example, initially the layer 8 of ligneous material has the shape of a rectangular sheet. The surface on the front face 14 is delimited by edges 32. The assembly 30 comprises a table 34 arranged to receive the two layers 8. The table 34 is flat and larger than the two layers 8. The assembly 30 further comprises a drawing tool 36 for defining for each layer of ligneous material a joining line 10, a cutting tool 40 and an assembling unit 42.

The drawing tool 36 for defining the joining line 10 for each layer 8 of ligneous material comprises an image captor 44, a joining line tracer 46, and a transmission unit 48. For example, the drawing tool 36 for defining the joining line 10 for each layer 8 of ligneous material comprises a monitor and is controlled by data processing means for example a software running on a computer.

The image captor 44 is able to capture the surface of at least a joining area 20 of each layer 8 of ligneous material. For example, the image captor 44 is a camera. Alternatively, the image captor 44 comprises a plurality of cameras, each camera being directed to the joining area 20 of a different layer 8. The monitor is able to display the images acquired by the image captor 44.

The joining line tracer 46 is arranged for tracing the joining lines 10 on the acquired images. For example, the monitor comprises a Human-Computer Interface that allows the operator to trace a joining line 10 with the tracer 46 and visualize it. The tracer 46 is able to trace automatically the complementary joining line 10 after the tracing of a first joining line 10. The joining line tracer 46 is able to display the traced joining lines 10 directly on the displayed images as waterline. The display images on figure 3 shows acquired images with the traced joining line in waterline.

Advantageously, a zoom is possible on the display images to help the detection of natural wood grain patterns 18.

Advantageously, the monitor comprises two display areas on the screen. A first display area shows the acquired image and the traced joining lines 10. A second display area shows a yield of the joining areas 20 of the panel 4 after cutting if the traced joining lines 10 were chosen as definitive joining line 10.

The transmission unit 48 is adapted to transmit the traced joining lines 10 to the cutting tool 40.

The cutting tool 40 is adapted to cut the layer 8 according to the traced joining line 10 transmitted by the drawing tool 36. Advantageously, the cutting tool 40 is a laser cutting tool. For example, the cutting tool 40 is able to cut with a precision of 0.01 mm. The table 34 of the assembly 30 is a laser cutting table and the cutting tool 40 comprises a laser and a control unit.

The assembling unit 42 is used for assembling the two layers 8 of ligneous material by applying the joining lines 10 of the two layers 8 against each other. For example, the assembling unit comprises pushers.

The method will now be described referring to figure 2 to 6.

The method comprises a providing step, a step of defining the joining line 10 for each layer 8 of ligneous material, a cutting step and an assembling step.

During the providing step, at least two layers 8 of ligneous material to be joined to form the panel of ligneous material 4 are provided. The layers 8 are placed on the table 34 side by side according to their natural wood grain pattern 18. Advantageously, two edges 32 of the layers 8 are put into contact. It reduces the surface of the joining areas 20 that needs to be filmed.

In the example, illustrated in fig 6, with the burls patterns, the layers 8 are place on the table 34 so that the patterns 18 are approximately in mirror match way. In the case of layers 8 with straight range veneers, as illustrated in figure 3 to 5, the layers 8 are placed on the table 34 such that the average main directions A of each layer 8 are sensitively aligned in their joining area 20. By sensitively aligned it is meant that the angle between the average main directions A is less than 10 °, advantageously the angle is lower than 1 degrees and preferably lower than 0.5 degrees.

The step of defining the joining line 10 for each layer 8 of ligneous material comprises an acquiring step, a tracing step, a preview step, a validation step, and a transmission step.

The image captor 44 acquires an image of the surface of a joining area 20 of each layer 8 of ligneous material to be joined. The acquired images are displayed in real time on the monitor. In an embodiment, the method further comprises a step of enhancing a color range in the acquired image and/or zooming. The displayed images are shown with a colors monitoring range. The color monitoring enhances the patterns 18, for example, the wood grain or veneers, that are similar in both layers 8 to facilitate identification a pattern 18 and tracing the joining line 10.

Once similar patterns are identified in both joining areas 20, the tracing step is performed with the joining line tracer 46 on the monitor displaying the acquired images. The operator places the traced joining line 10 as waterline on the acquired image on the monitor. The traced joining lines are overlaying the displayed images. Each joining line 10 is complementary to the joining line 10 of the other joining area 20.

A preview step occurs after the first tracing step. During the preview step a simulated resulting panel image is displayed. The simulated resulting panel image is an image of the two layers 18 of ligneous material with the traced joining lines 10 of the two layers 8 applied against each other, and without the part intended to be cut along the traced joining lines 10 during the cutting step.

The simulated resulting panel image is displayed for example on the second display area on the screen. For example the preview step is in real time and continuous. In an embodiment, the simulated resulting panel images are displayed with enhanced color range to make it easier to see if the joining lines 10 match each other. The operator reads the rendering simulation and the yield.

If the operator is not satisfied by the result, the operator changes the shape of the traced joining line 10 according to these results. The acquiring step, the tracing step and the preview step are repeated until a validation step. The operator can change the traced joining line 10 until the validation step. For example, before the validation step, the operator can change the parameters of the colors monitoring range to check the result or to facilitate the next tracing step.

Once the operator agrees with the rendering and the yield, the operator validates for example by pressing a button on the monitor. The validation step triggers automatically the transmission step.

The transmission unit 48 transmits the traced joining lines 10 to the cutting tool 40.

During the cutting step, the cutting tool 40 cuts each layer 8 of ligneous material along the defined joining lines 10. Advantageously the cutting step by the cutting tool 40 is also automated. If the cutting step is a laser cutting step, the parameters for the laser power and trajectory depend on the traced joining line 10 transmitted and on the nature of the layers 8.

Then in the assembling step, the two layers 8 of ligneous material are assembled by applying the joining lines 10 of the two layers 8 against each other. For example, the layers 8 are assembled and glued on the backing layer 22 to form a complex 1 as shown on figure 1.

Advantageously, the transmitting step, the cutting step and the assembling step start only after the validation step.

Advantageously, the layers 8 position on the table 34 is controlled during the steps of defining the joining lines 10 and the cutting step. For example the layers 8 are immobilized until the assembling step. This prevents untimely movement during the tracing steps and before the cutting step. Alternatively, if the cutting tool 40 requires a movement of the layers 8 during the cutting steps, the layers 8 are moved by the cutting tool 40 in a control manner.

The method described above is particularly simple to carry out and allows obtaining a trim element with a visible face having the appearance of a large wood panel with a single layer since the joining lines 10 are substantially invisible once the layers are assembled. Such a trim element can be used to line a part of a compartment of a vehicle and gives a particularly attractive appearance. The whole method is very rapid. For example, a trained operator needs less than 40 second to perform the step of defining the joining lines 10. The other steps can be automated. In comparison, without this method, a high skill artisan requires more than 30 minutes per cuts. Moreover the yield control results in less faulty manufacture and defective panels 4.

The method has been described for a panel 4 comprising two layers 8 of ligneous material 8. However, it is to be understood that the complex 1 could comprise more layers 8 adjacent to each other, each joining line 10 being formed by the method described above. In this case, one or more layers 8 can comprise two or more joining lines 10 depending on the number of adjacent layers to this layer 8.

The method has been described with natural wood grain pattern 18 being burl veneers pattern or straight grain patterns. However, it is to be understood that the method is usable with other natural wood grain patterns 18 and with patterns formed by wood fibers extending in a resin matrix.

The method has been described with layers 8 of ligneous material with the same general pattern 18. Alternatively, the method is applicable as long as the layers 8 present substantially similar patterns 18 in the joining area 20.

## Claims

1. Method for producing a trim element comprising at least a panel (4) of ligneous material, said method comprising:
- providing at least two layers (8) of ligneous material to be joined together along a joining line (10) to form the panel (4) of ligneous material,
- defining for each layer (8) of ligneous material a joining line (10), the joining line (10) of one of the layer (8) of ligneous material being complementary to the joining line (10) of the other layer (8) of ligneous material,
- cutting each layer (8) of ligneous material along the joining line (10) of said layer,
- assembling the two layers (8) of ligneous material by applying the joining lines (10) of the two layers (8) against each other,
**characterized in that** the step of defining the joining line (10) for each layer (8) of ligneous material comprises the following steps:
- acquiring an image of the surface of at least a joining area (20) of each layer (8) of ligneous material, the joining area (20) being the area of the layer (8) of ligneous material wherein the joining line (10) is to be defined,
- tracing the joining line (10) on the acquired images, each joining line (10) extending substantially along at least one natural wood grain pattern (18) of the joining area (20) and being complementary to the joining line (10) of the other joining area (20),
- transmitting the traced joining lines (10) to a cutting tool (40) arranged to cut each layer (8) of ligneous material along the defined joining lines (10).

2. Method according to claim 1, wherein the cutting step is a laser cutting step.

3. Method according to any of claim 1 or 2, wherein the tracing step is performed on a monitor displaying the acquired images, using a joining line tracer (46) to trace and display the joining lines (10) on the monitor.

4. Method according to any of claim 1 to 3, comprising a step of enhancing a color range in the acquired image.

5. Method according to any of claims 1 to 4, comprising a step of zooming on a part of the joining area (20) to detect the natural wood grain pattern (18).

6. Method according to any of claim 1 to 5, comprising a preview step wherein a simulated resulting panel image is displayed, the simulated resulting panel image being a simulated image of the two layers (8) of ligneous material with the traced joining lines (10) of the two layers (8) applied against each other.

7. Method according to claim 6, wherein the acquiring step, the tracing step and the preview step are repeated until a validation step, and wherein the transmitting step and the cutting step start only after the validation step.

8. Producing assembly (30) for producing a trim element comprising at least a panel of ligneous material, the producing assembly (30) comprising:
- at least two layers (8) of ligneous material to be joined together along a joining line (10) to form the panel (4) of ligneous material,
- a drawing tool (36) for defining for each layer (8) of ligneous material a joining line (10), the joining line (10) of one of the layer (8) of ligneous material being complementary to the joining line (10) of the other layer (8) of ligneous material
- a cutting tool (40) for cutting each layer (8) of ligneous material along the joining line (10) of said layer (8),
- an assembling unit (42) for assembling the two layers (8) of ligneous material by applying the joining lines (10) of the two layers (8) against each other,
**characterized in that** the tool drawing (36) for defining the joining line (10) for each layer (8) of ligneous material comprises:
- an image captor (44) of the surface of at least a joining area (20) of each layer (8) of ligneous material, the joining area (20) being the area of the layer (8) of ligneous material wherein the joining line (10) is to be defined,
- a joining line tracer (46) for tracing the joining lines (10) on the acquired images, each joining line (10) extending substantially along at least one natural wood grain pattern of the joining area and being complementary to the joining line (10) of the other joining area (20),
- a transmission unit (48) arranged to transmit the traced joining lines (10) to the cutting tool (40).

9. Producing assembly (30) according to claim 8, wherein the tool for defining the joining line (10) for each layer (8) of ligneous material comprises a monitor arranged to display the images acquired by the captor (44), the joining line tracer being arranged to display the traced joining lines (10) directly on the displayed images as waterline.

10. Producing assembly (30) according to any of claim 8 or 9, wherein the cutting tool (40) is a laser cutting tool.
